# FASCICULE DE BREVET EUROPEEN

(11) **EP 1 328 566 B1**
(45) Date de publication et mention de la délivrance du brevet: **13.07.2011**
(21) Numéro de dépôt: 01982571.0
(22) Date de dépôt: 26.10.2001
(51) Int. Cl.: C08G 18/69, C08G 18/76, F16L 59/14, C08L 75/14

(54) **COMPOSITION ISOLANTE A BASE DE GEL ELASTOMERE POLYURETHANE ET SON UTILISATION**
ISOLIERUNGSZUSAMMENSETZUNG BASIEREND AUF POLYURETHANELASTOMERGEL UND IHRE VERWENDUNG
POLYURETHANE ELASTOMER GEL INSULATING COMPOSITION AND USE THEREOF

(30) Priorité: 27.10.2000 FR 0013809
(43) Date de publication de la demande: 23.07.2003
(73) Titulaire: Cray Valley Technology USA, LLC, Wilmington, DE 19803 (US)
(72) Inventeur: BONNET, Evelyne, F-60260 LA MORLAYE (FR); MARTIN, Laurent, Tokyo 175-0094 (JP); EGRET, Hélène, F-76000 ROUEN (FR)
(74) Mandataire: Chaillot, Geneviève
(86) Numéro de dépôt international: PCT/FR2001/003339
(87) Numéro de publication internationale: WO 2002/034809

(56) Documents cités:
- EP-A- 0 222 634
- US-A- 4 824 705
- DATABASE WPI Section Ch, Week 198351 Derwent Publications Ltd., London, GB; Class A12, AN 1983-848369 XP002171874 & JP 58 196227 A (IDEMITSU KOSAN CO LTD), 15 novembre 1983 (1983-11-15)

## Description

La présente invention se rapporte au domaine de l'isolation thermique, particulièrement à l'isolation thermique de conduits de transport ou de transfert de matériaux. Elle décrit l'utilisation d'une composition isolante, sous la forme d'un élastomère polyuréthane réticulé, obtenu par la réaction d'un polyol et d'un polyisocyanate en présence d'une certaine quantité d'une charge organique chimiquement inerte vis à vis des isocyanates, laquelle charge est telle que définie dans la revendication 1 et est de préférence au moins un liquide isolant thermique.

La présente invention trouve son application dans les domaines techniques mettant en oeuvre des conduits ou des canalisations de transfert, d'évacuation ou de transport de matériaux liquides plus ou moins visqueux et nécessitant la conservation de la température des matériaux pendant leur transport, ou de limiter les pertes de chaleur ou le réchauffement des conduits de transport en cas d'arrêts. On peut citer par exemple le domaine de transport de produits pétroliers à partir d'un puit terrestre ou sous-marin, de conduites d'eau chaude pour le chauffage urbain, de conduites de réchauffage ou de refroidissement de lignes industrielles, le domaine de la climatisation et les installations nécessitant la conservation et la chaleur ou du froid, l'isolation bâtiment.

Dans ces domaines, on est souvent confrontés aux problèmes d'échange thermique et de la conservation de la température des produits transportés. En effet, une mauvaise isolation peut causer divers ennuis. Par exemple, les produits visqueux sont transportés à plus ou moins haute température. Une mauvaise isolation avec le milieu environnant moins chaud provoque une baisse de température, une augmentation de la viscosité du produit transporté, un ralentissement du débit, pouvant aller jusqu'à un dépôt de matière, ou la gélification et le bouchage du conduit, avec des conséquences graves s'il y a arrêt de production en ligne.

On peut noter aussi qu'une augmentation de température d'un produit transporté peut détruire les propriétés de ce produit et éventuellement le dégrader entièrement, en cas de transport de produits volatils, créer des surpressions et des risques de détérioration des conduits et des risques d'explosion.

Il est donc nécessaire d'isoler thermiquement les conduits servant pour le transport ou le transfert de matériaux, en particulier les matériaux liquides plus ou moins visqueux, avec des matériaux isolants faciles à mettre en oeuvre sur le lieu même d'application, en particulier faciles à mouler entre les parois de l'enveloppe et de la conduite, avec une bonne adhésion et une bonne étanchéité de l'ensemble et avec des performances élevées de résistance à la compression, plus particulièrement dans les conditions de transport par pipes sous-marins en grande profondeur.

Pour résoudre les problèmes évoqués précédemment, l'invention de la demanderesse propose d'isoler les conduits à l'aide d'un gel polyuréthane d'isolation thermique obtenu par la réaction d'au moins un polyol avec au moins un polyisocyanate, en présence d'au moins une certaine quantité d'une charge organique chimiquement inerte vis à vis des isocyanates, ladite charge organique étant telle que définie la revendication 1 et est de préférence à base d'au moins un liquide isolant thermique.

En effet, la demanderesse a trouvé que l'isolation avec ce type de gel permet de :
- obtenir des λ (lambda : conductivité thermique) très faibles, avec une résistance élevée à la compression. Ce qui n'est pas le cas des élastomères chargés de matériaux solides tels que billes de verre creux, fibres, liège ... En fait, le comportement du gel est proche de celui d'un liquide incompressible
- pouvoir moduler facilement le module élastique ou la densité
- offrir des modes de mise en oeuvre aisée tels que l'injection ou le prémoulage
- fabriquer des conduits de transfert, plus ou moins souples, thermiquement isolés et enroulables sur bobines, avec une parfaite adhésion du matériau isolant moulé et une étanchéité garantie de l'ensemble.

Le conduit de transport peut se présenter sous différentes formes, mais de préférence tubulaire, de même que l'enveloppe autour du conduit de transport. Le conduit de transport, tout comme l'enveloppe extérieure peuvent être en métal, comme le fer, l'acier, le cuivre, l'aluminium et les alliages métalliques mais peuvent être également en matières synthétiques polymériques comme le polypropylène, le polyéthylène, le PVC, les polyamides, les polyuréthanes ou tout autre polymère transformable en tubes, en plaques ou en enveloppes. L'option d'enveloppes en matières polymères citées plus haut est une option d'autant plus pratique et efficace que la solution de l'invention, permettant l'obtention d'un gel ayant des performances d'incompressibilité équivalentes à un liquide, rend possible l'utilisation de matériaux d'enveloppe moins rigides, plus légers et moins difficiles à mettre en oeuvre et, par conséquent, moins coûteux globalement.

L'enveloppe extérieure peut être de préférence une couche épaisse plus ou moins rigide, de quelques millimètres à plusieurs centimètres d'épaisseur, mais peut se présenter aussi sous forme de film souple ou semi rigide.

L'espace libre entre le conduit de transport et l'enveloppe extérieure, où sera appliqué le gel isolant, peut être variable et sera défini en fonction du degré d'isolation souhaité, calculé à partir du coefficient d'isolation du gel et des températures à maintenir.

D'autres matériaux isolants peuvent être utilisés en combinaison avec le gel isolant, par superposition ou intercalage de différentes couches d'isolation.

On peut combiner le gel polyuréthane avec une mousse isolante, telle que les mousses en polyuréthane rigide isolantes, les mousses syntactiques, les mousses de polyoléfines, le polystyrène expansé ou des isolants minéraux, comme la laine de verre ou la laine de roche. Ces matériaux compacts ou expansés, pouvant constituer l'enveloppe extérieure, à l'intérieur de laquelle se trouve le gel appliqué sur ce conduit de transport. Le gel isolant de la présente invention présente vis-à-vis de ces matériaux isolants courants au moins l'avantage essentiel de résistance à la compression. Tous les matériaux isolants courants ont l'inconvénient de s'écraser sous compression s'il n'y a pas la protection d'une enveloppe rigide entourant la matériau isolant.

Un autre avantage de l'invention est de pouvoir mettre en oeuvre la composition sous forme liquide, sur les lieux mêmes de l'utilisation, ou sous forme de gel réticulé prémoulé.

Par exemple, le liquide, avant réticulation et transformation en gel, peut être coulé ou injecté entre le conduit de transport et l'enveloppe extérieure, la réticulation s'opérant in situ, mais aussi l'isolant peut être appliqué sous forme de gel réticulé prémoulé, sous forme de plaques, de bandes ou d'objets moulés aux dimensions définies par l'objectif d'isolation à atteindre.

L'avantage de la composition de l'invention sous forme de gel, outre les très bonnes performances d'isolation thermique, est l'aptitude du gel à remplir tous les espaces vides et interstices, à adhérer sur de nombreux substrats par effet de tack, à se déformer sous contrainte, en répartissant les pressions, avec un comportement équivalent à celui d'un liquide incompressible. Les gels, tels que décrits dans l'invention, possèdent une très bonne reprise élastique et retrouvent leur forme initiale, une fois les contrainte éliminées. La résistance aux hautes pressions et la facilité de mise en oeuvre in situ, sur le lieu même d'utilisation, sont des avantages particulier pour l'isolation thermique de conduites de transport sous-marines.

Les gels élastomères de l'invention assurent en plus de l'isolation une fonction d'étanchéité aux liquides et aux gaz.

La présente invention a donc pour objet l'utilisation d'une composition d'isolation thermique, sous la forme d'un gel isolant, pour l'isolation de canalisations contenues dans une conduite de transfert de produits. Le gel isolant étant obtenu à partir d'une composition réticulable contenant au moins un polyol, au moins un polyisocyanate et au moins une certaine quantité d'une charge organique chimiquement inerte telle que définie dans la revendication 1.

La composition isolante réticulable, selon la présente invention, comprend donc au moins un polyol, au moins un polyisocyanate de fonctionnalité ≥ 2, éventuellement un catalyseur de réticulation et une quantité suffisante d'au moins une charge organique chimiquement inerte, de préférence liquide.

Après réticulation, la composition selon la présente invention se trouve sous la forme d'un solide homogène caoutchouteux présentant une très faible exsudation ou absence d'exsudation.

Selon la présente invention, on utilisera une quantité pondérale de charge organique chimiquement inerte, vis-à-vis des polyisocyanates, supérieure à 20% en poids, de préférence une quantité de 50 à 95% et plus préférentiellement de 60 à 90% en poids du total de la composition isolante réticulable.

Selon la présente invention, la charge organique chimiquement inerte vis-à-vis des polyisocyanates, est un liquide isolant, compatible avec les polyols et les polyisocyanates. Cette charge liquide isolant est choisie parmi
1) les n- ou iso-paraffines en C₁₈-C₂₀ et leurs mélanges ou les paraffines chlorées. Des exemples typiques de paraffines sont :
   - le n-octadécane, le n-nonadécane, le n-eicosan ou des mélanges de ces paraffines, comme le LINPAR 18-20 de la société CONDEA
2) les résines ou huiles naphténiques en C₅-C₁₂ : les huiles naphténiques sont aussi des dérivés du pétrole qui sont des dérivés liquides en C₅-C₁₂ hydrogénés. Une huile minérale est en effet constituée de paraffines, de naphtènes, d'aromatiques et de polyaromatiques. Comme décrit ci-dessus, les paraffines sont des n-alcanes ou alcanes branchés. La structure naphténique est en fait un cycloalcane avec au moins un cycle à 6 carbones (voir 5 ou 7). Enfin dans les dérivés aromatiques, on distingue les aromatiques ou polyaromatiques. On distingue généralement parmi les huiles de brut deux types : les huiles naphténiques et les huiles aromatiques. Le NYPLEX 820 produit par NYNAS est un exemple typique d'huile naphténique. Il possède un taux d'aromatiques de 16%.
3) les carburéacteurs et plus particulièrement le kérosène. Cette famille de produits est plus particulièrement préférée.
4) les composés alkylpolyaromatiques commun de mélange d'isomères du dibenzyltoluène (DBT), le monoisopropylbiphényle (MTPB), les phénylxylyléthanes 5PXE); les mélanges de de benzyltoluènes et dibenzyltoluènes tels que deux décrits notamment dans le brevet européen n° 136230-B1; les mélanges de mono- et bis (méthylbenzyl)xylénes tels que ceux décrits dans la demande de brevet européen n° 0500345; les mélanges de benyltoluéne et de diphényléthane.

De préférence, on utilisera comme charge organique chimiquement inerte les huiles naphténiques ou les n-paraffines ou des mélanges de n-paraffines ou les carburéacteurs comme le kérosène.

La présente invention porte sur l'utilisation d'une composition sous la forme de gel élastomere plyuréthane, pour l'isolation thermique de conduit pour le transport de matériaux, obtenu a partir d'une composition réticulable, contenant au moins un polyol et au moins un polyisicyanate et au moins une charge organique liquide chimiquement inerte vis-à-vis des polyisocyanates, par réaction du polyol et du polyisocyanate en présence de la charge organique liquide chimiquement inerte vis-àvis des polyiscyanates et avec ladite charge organique inerte étant supérieure à 20% en poids du total de la composition, et choisies parmi les huiles et résines et dérivés hydrocarbonés suivants:
- les n- ou iso-paraffines en C₁₈-C₂₀, les paraffines chlorées,
- les carburants choisis parmi les carburéacteurs,
- les résines ou huiles naphténiques en C₅-C₁₂
- les composés polyaromatiques substitués ou non, renfermant éventuellement un ou plusieurs hétéroatomes.

Selon la présente invention, le polyisocyanate utilise peut être choisi parmi les polyisocyanates aromatiques, aliphatiques, cycloaliphatiques et ceux qui contiennent dans leur molécule un cycle isocyanurate, ayant au moins deux fonctions isocyanate dans leur molécule, susceptibles de réagir avec des fonctions hydroxyle d'un polyol pour former un réseau polyuréthane tri-dimensionnel provoquant la réticulation de la composition.

A titre d'illustration de polyisocyanates aromatiques utilisables selon la présente invention, on citera le 4,4'-diphénylméthane diisocyanate (MDI), les MDI polymériques, le triphényl-méthane triisocyanate.

A titre d'illustration de polyisocyanate aliphatique utilisable selon la présente invention, on citera le biuret du diisocyanate-1,6 hexane.

A titre d'illustration de polyisocyanates cycloaliphatiques, on citera l'isophorone diisocyanate (IPDI), le cyclohexyldiisocyanate (CHDI), le 4,4'-dicyclohexylméthane diisocyanate.

Un polyisocyanate polymère peut aussi être utilisé, qui comprend dans sa chaîne au moins deux motifs portant chacun au moins une fonction isocyanate.

Avantageusement, on utilise comme polyisocyanate polymère le produit de formule :

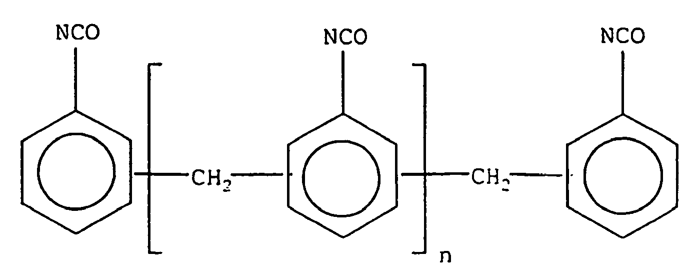

CAS Reg. Number (n° d'enregistrement CHEMICAL ABSTRACT) : 9016-87-9 qu'on désigne par PMDI.

La quantité de polyisocyanate selon la présente invention est choisie d'une façon telle que le rapport molaire NCO/OH est compris entre 0,5 et 2 et de préférence allant de 0,65 à 1, 20.

Selon la présente invention, le polycl est choisi parmi les polydiènes polyols, les polyesters polyols, les polyéthers polyols pris séparément ou en mélange.

Selon la présente invention, le polydiène polyol est de préférence un oligomère de diènes conjugués hydroxytéléchélique qui peut être obtenu par différents procédés tels que la polymérisation radicalaire de diènes conjugués ayant de 4 à 20 atomes de carbone en présence d'un amorceur de polymérisation tel que le péroxyde d'hydrogène ou un composé azoïque tel que l'azobis-2,2[méthyl-2, N-(hydroxy-2éthyl)propionamide] ou la polymérisation anionique de diène conjugué ayant de 4 à 20 atomes de carbone en présence d'un catalyseur tel que le naphtalène dilithium.

Selon la présente invention, le diène conjugué du polyol polydiénique est choisi dans le groupe comprenant le butadiène, l'isoprène, le chloroprène, le 1,3-pentadiène et le cyclopentadiène.

On ne sortirait pas de l'invention si on utilisait des oligomères hydroxytéléchéliques de diènes conjugués époxydés sur la chaîne ainsi que des oligomères hydrogénés hydroxytéléchéliques de diènes conjugués.

Selon la présente invention, les polyols polydiéniques peuvent avoir des masses molaires moyennes en nombre au plus égales à 7 000 et de préférence comprises entre 1 000 et 3 000. Ils présentent des fonctionnalités allant de 1 à 5 et de préférence allant de 1,8 à 3 et une viscosité dynamique mesurée à 30°C au moins égale à 600 mPa.s.

A titre d'illustration de polyols polydiéniques, on citera les polybutadiènes hydroxylés commercialisés par la Société ATOFINA sous les dénominations Poly Bd^{®} R 45 HT et Poly Bd^{®} R 20 LM.

Selon la présente invention, la composition peut comprendre en plus du polyol ou des polyols cités un ou plusieurs polyols de faible masse molaire.

Par polyol de faible masse molaire, on entend des polyols ayant des masses molaires allant de 50 à 800.

A titre d'illustration de tels polyols, on peut citer l'éthylène glycol, le propylène glycol, le diéthylène glycol, le dipropylène glycol, les polyétherpolyols, le butane diol-1,4, l'hexane diol-1,6, l'éthyl-2 hexane diol-1,3, le N,N bis (hydroxy-2 propyl)aniline, le méthyl-3 pentanediol-1,5, le triméthylol propane, le pentaérythritol, le bis phénol A propoxylé commercialisé par la Société AKZO sous la dénomination DIANOL 320 et le mélange d'au moins deux polyols précités.

Dans l'éventualité où l'on utilise un polyol de faible masse molaire, le rapport molaire NCO/OH devra être calculé en tenant compte des fonctions hydroxyles apportées par ledit polyol de faible masse molaire.

Dans l'éventualité où l'on utilise un catalyseur de réticulation, celui-ci peut être choisi dans le groupe comprenant des amines tertiaires, des imidazoles et des composés organométalliques.

A titre d'illustration d'amines tertiaires, on peut citer le diaza-1,4bicyclo[2.2.2]octane (DABCO), la N,N,N',N",N"-pentaméthyldiéthylène triamine.

A titre d'illustration de composés organométalliques, on peut citer le dibutyldilaurate d'étain, le dibutylacétate d'étain, les dérivés organiques du bismuth.

La composition réticulable de la présente invention peut être réalisée par mélangeage des divers constituants par tous moyens d'agitation suffisants pour assurer une bonne dispersion des constituants. Les composants peuvent être chauffés, si nécessaire, pour une meilleure homogénéisation. La composition peut contenir un ou plusieurs additifs tels que des antioxydants ou des inhibiteurs de corrosion.

La composition réticulable de l'invention présente l'avantage d'assurer une fonction d'isolation thermique de la ou des canalisation(s) passant dans la conduite du fait de sa faible conductivité thermique et d'empêcher toute convection. En outre, compte tenu de sa résistance à la pression hydrostatique, la composition de la présente invention peut être utilisée tout particulièrement pour l'isolation thermique de canalisations contenues dans une conduite sous-marine de transfert. En effet, la densité de la composition réticulable de l'invention peut être ajustée de façon à être proche voire inférieure à celle de l'eau de mer des fonds sous-marins.

La composition réticulable de l'invention, liquide lors de sa mise en oeuvre, possède un très faible retrait lors de sa réticulation, ce qui permet d'assurer une bonne interface entre le gel et les canalisations à enrober et un remplissage total des vides à l'intérieur de l'enveloppe contenant le gel, avec une très bonne adhésion de ce gel sur les parois de la conduite et de l'enveloppe.

Ci-après est décrite une coupe transversale d'une conduite afin d'illustrer l'invention.

De manière générale, une conduite comprend :
- une enveloppe qui est généralement en acier et peut être revêtue extérieurement par un revêtement anti-corrosion ;
- diverses canalisations véhiculant les produits, éventuellement une canalisation dite de service ; ces canalisations pouvant être également revêtues extérieurement par un revêtement anti-corrosion, et
- un espace rempli par le matériau de remplissage qui est constitué par la composition isolante réticulable de l'invention.

La composition d'isolation réticulable peut être mise en place par tous moyens appropriés.

Notamment, il est possible dans un mode de réalisation de l'invention d'injecter dans un tronçon une composition réticulable préalablement préparée et présentant une fluidité suffisante pour permettre le remplissage total dudit tronçon contenant la (ou les) canalisation(s). De préférence, la composition possède une viscosité inférieure à 200 mPa.s à la température de mise en oeuvre qui est au plus égale à 80°C.

Ensuite, on laisse réticuler ladite composition. La composition isolante réticulée est caractérisée par une conductivité thermique λ (lambda) inférieure à 0,25 W/m.K.

Le temps de prise, qui est le temps nécessaire pour que la composition selon la présente invention soit totalement réticulée, peut varier dans une large mesure. Cependant, ce temps de prise doit être ajusté d'une façon telle que la composition selon la présente invention puisse remplir totalement la conduite (sous-marine) et puisse mouiller parfaitement la (ou les) canalisation(s) à l'intérieur de ladite conduite pour assurer leur isolation.

L'homme de l'art ajustera donc les proportions des constituants de ladite composition et, éventuellement, les quantités de catalyseur de réticulation à utiliser pour obtenir le temps de prise adéquat.

La composition de la présente invention peut être également utilisée pour parfaire l'isolation thermique de canalisations comportant déjà un revêtement d'isolation primaire.

Un deuxième objet de la présente invention concerne une conduite sous-marine de transfert de produits comprenant au moins une canalisation, éventuellement au moins une canalisation dite de service, une enveloppe tubulaire de protection dans laquelle passent lesdites canalisations et un remplissage en un matériau d'isolation thermique mécaniquement caractérisée en ce que le matériau d'isolation thermique est constitué par une composition isolante sous la forme d'un gel obtenu à partir d'une composition réticulable telle que définie pour l'utilisation selon la présente invention.

Un troisième objet de la présente invention concerne une conduite de chauffage urbain, comprenant au moins une canalisation en PVC, transportant de l'eau chaude de la centrale thermique vers les habitations, une enveloppe tubulaire en matière plastique, PVC ou polyéthylène, de protection dans laquelle passent lesdites canalisations et un remplissage en un matériau d'isolation thermique mécaniquement caractérisée en ce que le matériau d'isolation thermique est constitué par une composition isolante sous la forme d'un gel élastomère polyuréthane, telle que définie pour l'utilisation selon la présente invention.

Un quatrième objet de la présente invention concerne un procédé d'isolation thermique de conduit pour le transport de matériaux liquides à partir d'une composition isolante réticulable, telle que définie pour l'utilisation selon la présente invention, ledit procédé comprenant les étapes suivantes :
a) Mélange intime du composant polyol et du composant charge isolante liquide de ladite composition isolante
b) Ajout au mélange de l'étape a) du composant polyisocyanate de ladite composition isolante, avec mélange intime de tous les composants
c) Moulage par coulée ou injection du mélange résultant de l'étape b) dans l'interstice formé entre la surface extérieure du conduit et la surface intérieure de l'enveloppe protectrice
d) Réticulation et solidification in situ pour obtenir le conduit isolé thermiquement prêt à l'emploi sur son lieu d'utilisation

Une variante de ce procédé consiste à réaliser les étapes c) et d) dans un moule pour obtenir des pièces prémoulées d'isolation thermique de conduit pour transport de matériaux, avec assemblage autour du conduit.

Un dernier objet de la présente invention concerne des pièces prémoulées d'isolation thermique de conduit, obtenues selon ladite variante de procédé, avant assemblage autour du conduit.

Ci-après, nous donnons des exemples de réalisation de compositions réticulables utilisables selon la présente invention.

Les compositions ont été préparées en utilisant les constituants suivants :
- Poly Bd^{®} 45 HT (ci-après désigné par Poly Bd^{®}):
   polybutadiène hydroxylé de masse moléculaire moyenne en nombre Mn égale à 2800 (déterminée par chromatographie d'exclusion stérique), présentant un indice d'hydroxyle I_{OH} exprimé en milliéquivalents par gramme de résine (meq/g) égal à 0,83, une viscosité égale à 5 000 mPa.s à 30°C et une densité égale à 0,90.
- Un mélange de n-paraffines dont le composant principal est le n-octadécane (LINPAR 18-20 de CONDEA).
- Une résine naphténique, type Nyflex 820, produite et commercialisée par NYNAS.
- Un prépolymère tel que l'UREFLEX MU 55 commercialisé par Baulé.
- Isonate M 143 (ci-après désigné par Isonate) commercialisé par la Société DOW CHEMICAL _{:} MDI polymérique présentant une teneur en NCO égale à 29,16%, une fonctionnalité égale à 2,2 et une viscosité à 20°C égale à 130 mPa.s.
- Dibutyldilaurate d'étain (catalyseur de réticulation) ci-après désigné par DBTL (FASCAT 4220CL).
- "No Air" liquide antimousse commercialisé sous ce nom par la Société BARLOCHER.

### Exemples

Les exemples suivants illustrent l'invention sans en limiter la portée.

### 1. Formulations :

Des exemples de formulations réalisées sont donnés dans le tableau suivant :

| | Composition 1 | Composition 2 | Composition 3 | Composition 4 | Composition 5 |
|---|---|---|---|---|---|
| Poly Bd R 45 HT | 100 | 100 | 100 | 100 | 100 |
| Mélange de n-paraffine, avec n-octadécane>60% LINPAR de CONDEA | 250 | - | | | |
| Kérosène (Kedrul 212 de TOTALFINAELF) | | | 200 | 200 | 500 |
| NYFLEX 820 | - | 200 | | | |
| FASCAT 4220 CL (Dilaurate de dibutyl étain) | 0,1 | 0,025 | 0,1 | 0,1 | 0,1 |
| "No Air" liquid | - | 0,5 | 0,5 | 0,5 | 0,5 |
| Isonate M 143 % NCO = 29,16 | 12,7 | - | | 12,7 | 12,7 |
| Ureflex MU 55 % NCO = 5,25 | | 47,04 | 47,04 | | |
| NCO/OH | 1,05 | 0,7 | 0,7 | 1,05 | 1,05 |

### Mode opératoire :

### Composition 1 :

Le mélange Poly Bd R 45 HT / paraffine LINPAR 18-20 est dégazé à 80°C pendant 1 heure sous vide. Le mélange est ensuite refroidi à 50°C pour ajouter l'isocyanate Isonate M 143 puis laissé à 50°C pour que la réticulation se produise.

### Composition 2 :

Le mélange Poly Bd R 45 HT / NYFLEX 820 est dégazé pendant 1 heure sous vide à température ambiante. Le prépolymère polyisocyanate est ensuite ajouté et la réticulation s'opère à température ambiante.

### Compositions 3-5 :

On mélange le Poly Bd R 45 HT et le kérosène sous agitation à température ambiante. Le prépolymère polyisocyanate est ensuite ajouté et la réticulation s'opère à température ambiante.

### 2. Mesures de la conductivité thermique :

Les essais sont réalisés sur un appareillage de mesure de conductivité thermique de type FOX série 300 (DELTA) ou SOFT-K conformément à l'ASTM C518 et ISO 2581. Les mesures sont réalisées sur des échantillons de taille 30x30x2 cm placés entre la section supérieure (plaque froide) et la section inférieure (plaque chaude) de l'appareillage.

Les résultats sont donnés dans le tableau suivant :

| | Plaque froide / Plaque chaude Température °C | Composition 1 | Composition 2 | Composition 3 | Composition 4 | Composition 5 |
|---|---|---|---|---|---|---|
| Lambda à 10°C W/m.K | 0°C / 20°C | 0,1216 | 0,136 | | 0,139 | 0,125 |
| Lambda à 25°C W/m.K | 10°C / 40°C | | 0,1385 | 0,115 | 0,135 | 0,128 |

### 3. Conclusion :

Les valeurs de conductivité thermique obtenues montrent l'efficacité dans l'isolation thermique des compositions réticulables de l'invention.

## Revendications

1. Utilisation d'une composition sous la forme de gel élastomère polyuréthane, pour l'isolation thermique de conduit pour le transport de matériaux, obtenu à partir d'une composition réticulable, contenant au moins un polyol et au moins un polyisocyanate et au moins une charge organique liquide chimiquement inerte vis-à-vis des polyisocyanates, par réaction du polyol et du polyisocyanate en présence de la charge organique liquide chimiquement inerte vis-à-vis des polyisocyanates et avec ladite charge organique inerte étant supérieure à 20% en poids du total de la composition, et choisie parmi les huiles et résines et dérivés hydrocarbonés suivants :
- les n- ou iso-paraffines en C₁₈-C₂₀, les paraffines chlorées,
- les carburants choisis parmi les carburéacteurs,
- les résines ou huiles naphténiques en C₅-C₁₂
- les composés polyaromatiques substitués ou non, renfermant éventuellement un ou plusieurs hétéroatomes.

2. Utilisation selon la revendication 1 **caractérisée en ce que** la charge organique inerte représente de 50 à 95% en poids du total de la composition.

3. Utilisation selon la revendication 1 ou 2 **caractérisée en ce que** la charge organique neutre est une n-paraffine ou un mélange de n-paraffines.

4. Utilisation selon la revendication 1 ou 2 **caractérisée en ce que** la charge organique neutre est une résine naphténique.

5. Utilisation selon la revendication 1 ou 2 **caractérisée en ce que** la charge organique neutre est un carburéacteur qui est le kérosène.

6. Utilisation selon l'une des revendications précédentes **caractérisée en ce que** le polyol est choisi parmi les polyesters polyols, les polyéthers polyols et les polydiènes polyols.

7. Utilisation selon la revendication 6 **caractérisée en ce que** le polyol est un polydiène polyol.

8. Utilisation selon la revendication 7 **caractérisée en ce que** le polydiène polyol a une masse molaire moyenne en nombre au plus égale à 7 000 et, de préférence comprise entre 1 000 et 3 000, et présente une fonctionnalité allant de 1 à 5 et, de préférence, allant de 1,8 à 3.

9. Utilisation selon la revendication 7 ou 8 **caractérisée en ce que** le polydiène polyol est un oligomère de diène conjugué hydroxytéléchélique.

10. Utilisation selon la revendication 9 **caractérisée en ce que** le diène conjugué est le butadiène.

11. Utilisation selon l'une des revendications 1 à 10 **caractérisée en ce que** le polyisocyanate est un polyisocyanate aromatique ou cycloaliphatique ou un prépolymère d'isocyanate.

12. Utilisation selon la revendication 11 **caractérisée en ce que** le polyisocyanate est le 4,4'-diphényl-méthane diisocyanate (MDI) ou un MDI polymérique.

13. Utilisation selon la revendication 10 **caractérisée en ce que** le polyisocyanate est un prépolymère d'oligomère de diène conjugué hydroxytéléchélique.

14. Utilisation selon l'une des revendications 1 à 13 **caractérisée en ce que** la composition réticulable comprend en plus un ou plusieurs polyols de masses molaires allant de 50 à 800.

15. Utilisation selon l'une quelconque des revendications 1 à 14 **caractérisée en ce que** le rapport molaire NCO/OH est compris entre 0,5 et 2 et de préférence allant de 0,65 à 1,20.

16. Utilisation selon l'une quelconque des revendications 1 à 15 **caractérisée en ce que** la composition isolante comprend un catalyseur de réticulation.

17. Utilisation selon la revendication 16 **caractérisée en ce que** le catalyseur de réticulation est le dilaurate de dibutyl étain.

18. Utilisation selon l'une quelconque des revendications 1 à 17 **caractérisée en ce que** la composition isolante réticulée a un coefficient d'isolation thermique inférieur à 0,25 W/m.K.

19. Conduite sous-marine de transfert de produits comprenant au moins une canalisation, éventuellement au moins une canalisation dite de service, une enveloppe tubulaire de protection dans laquelle passent lesdites canalisations et un remplissage en un matériau d'isolation thermique **caractérisée en ce que** le matériau d'isolation thermique est constitué par une composition isolante sous la forme d'un gel obtenu à partir d'une composition réticulable telle que définie pour l'utilisation selon l'une des revendications 1 à 18.

20. Conduite de chauffage urbain, comprenant au moins une canalisation en PVC, transportant de l'eau chaude de la centrale thermique vers les habitations, une enveloppe tubulaire en matière plastique, PVC ou polyéthylène, de protection dans laquelle passent lesdites canalisations et un remplissage en un matériau d'isolation thermique **caractérisée en ce que** le matériau d'isolation thermique est constitué par une composition isolante sous la forme d'un gel élastomère polyuréthane, composition telle que définie pour l'utilisation selon l'une des revendications 1 à 18.

21. Procédé d'isolation thermique de conduit pour le transport de matériaux à partir d'une composition isolante réticulable telle que définie pour l'utilisation selon l'une des revendications 1 à 18, ledit procédé comprenant les étapes suivantes :
a) Mélange intime du composant polyol et du composant charge inerte liquide de ladite composition isolante ;
b) Ajout au mélange de l'étape a) du composant polyisocyanate de ladite composition isolante, avec mélange intime de tous les composants ;
c) Moulage par coulée ou injection du mélange résultant de l'étape b) dans l'interstice formée entre la surface extérieure du conduit et la surface intérieure de l'enveloppe protectrice
d) Réticulation et solidification in situ pour obtenir le conduit isolé thermiquement prêt à l'emploi sur son lieu d'utilisation.

22. Procédé selon la revendication 21 dans lequel les étapes c) de moulage et d) de réticulation sont réalisées dans un moule pour obtenir des pièces prémoulées d'isolation thermique pour conduit de transport de matériaux liquides, et comprenant une étape e) d'assemblage de ces pièces prémoulées autour dudit conduit.

23. Pièces prémoulées d'isolation thermique de conduit obtenues suivant les étapes a), b), c) et d) du procédé défini selon la revendication 22.

## Claims

1. Use of a composition in the form of polyurethane elastomer gel, for thermal insulation of a conduit for the transport of materials, obtained from a crosslinkable composition, containing at least one polyol and at least one polyisocyanate and at least one liquid organic filler chemically inert to polyisocyanates, by reacting the polyol and the polyisocyanate in the presence of the liquid organic filler chemically inert to polyisocyanates, where the said inert organic filler is more than 20% by weight of the entire composition and is chosen among the following oils and resins and hydrocarbon derivatives:
- C₁₈-C₂₀ n- or isoparaffins, chlorinated paraffins,
- fuels chosen among aviation fuels,
- C₅-C₁₂ naphthenic oils or resins
- unsubstituted or substituted polyaromatic compounds, optionally containing one or more heteroatoms.

2. Use according to Claim 1, **characterized in that** the inert organic filler represents from 50 to 95% by weight of the entire composition.

3. Use according to Claim 1 or 2, **characterized in that** the neutral organic filler is an n-paraffin or a mixture of n-paraffins.

4. Use according to Claim 1 or 2, **characterized in that** the neutral organic filler is a naphthenic resin.

5. Use according to Claim 1 or 2, **characterized in that** the neutral organic filler is an aviation fuel, which is kerosene.

6. Use according to one of the preceding claims, **characterized in that** the polyol is chosen among polyester polyols, polyether polyols and polydiene polyols.

7. Use according to Claim 6, **characterized in that** the polyol is a polydiene polyol.

8. Use according to Claim 7, **characterized in that** the polydiene polyol has a number-average molar mass of at most 7 000, preferably between 1 000 and 3 000, and has a functionality of from 1 to 5, preferably from 1.8 to 3.

9. Use according to Claim 7 or 8, **characterized in that** the polydiene polyol is a hydroxytelechelic oligomer of a conjugated diene.

10. Use according to Claim 9, **characterized in that** the conjugated diene is butadiene.

11. Use according to one of Claims 1 to 10, **characterized in that** the polyisocyanate is an aromatic or cycloaliphatic polyisocyanate or an isocyanate prepolymer.

12. Use according to Claim 11, **characterized in that** the polyisocyanate is diphenylmethane 4,4'-diisocyanate (MDI) or a polymeric MDI.

13. Use according to Claim 10, **characterized in that** the polyisocyanate is a prepolymer based on a hydroxytelechelic oligomer of a conjugated diene.

14. Use according to one of Claims 1 to 13, **characterized in that** the crosslinkable composition also comprises one or more polyols having molar masses of from 50 to 800.

15. Use according to any one of Claims 1 to 14, **characterized in that** the molar ratio NCO/OH is between 0.5 and 2, preferably from 0.65 to 1.20.

16. Use according to any one of Claims 1 to 15, **characterized in that** the insulating composition comprises a crosslinking catalyst.

17. Use according to Claim 16, **characterized in that** the crosslinking catalyst is dibutyltin dilaurate.

18. Use according to any one of Claims 1 to 17, **characterized in that** the crosslinked insulating composition has a thermal insulation factor below 0.25 W/m.K.

19. Submarine product-transfer conduit comprising at least one pipeline system, optionally at least one pipeline system known as a service pipeline system, one protective tubular sheath through which the said pipeline systems pass and a filling made of a thermally insulating material, **characterized in that** the thermally insulating material consists of an insulating composition in the form of a gel obtained from a crosslinkable composition as defined for the use according to one of Claims 1 to 18.

20. District heating conduit comprising at least one PVC pipeline system transporting hot water from the thermal power station to the housing, a tubular protective sheath made of a plastic, PVC or polyethylene, through which the said pipeline systems pass, and a filling made of a thermally insulating material, **characterized in that** the thermally insulating material consists of an insulating composition in the form of an polyurethane elastomer gel, a composition as defined for the use according to one of Claims 1 to 18.

21. Process for thermal insulation of a conduit for transporting materials, obtained from a crosslinkable insulating composition as defined for the use according to one of Claims 1 to 18, the said process comprising the following steps:
a) Intimate mixing of the polyol component and of the inert liquid filler component of the said insulating composition;
b) Addition, to the mixture of step a), of the polyisocyanate component of the said insulating composition, with intimate mixing of all of the components;
c) Casting or injection moulding of the resultant mixture from step b) into the interstitial space formed between the outer surface of the conduit and the inner surface of the protective sheath;
d) Crosslinking and solidification in situ to obtain the thermally insulated conduit ready for use at its point of use.

22. Process according to Claim 21 in which the steps c) moulding and d) crosslinking are implemented in a mould to obtain premoulded sections of thermal insulation for a conduit for transporting liquid materials, and comprising a step e) assembling these premoulded sections around the said conduit.

23. Premoulded sections of thermal insulation for a conduit which have been obtained following the steps a), b), c) and d) of the process defined according to Claim 22.

## Patentansprüche

1. Verwendung einer Zusammensetzung in Form eines Polyurethanelastomergels zur Warmedammung einer Leitung für den Transport von Materialien, erhalten aus einer vernetzbaren Zusammensetzung, die mindestens ein Polyol und mindestens ein Polyisocyanat und mindestens einen gegenüber Polyisocyanaten chemisch inerten flüssigen organischen Füllstoff enthalt, durch Umsetzung des Polyols und des Polyisocyanats in Gegenwart des gegenüber Polyisocyanaten chemisch inerten flüssigen organischen Füllstoffs, wobei der inerte organische Füllstoff in einer Menge von mehr als 20 Ges.-%, bezogen auf die Gesamtmenge der Zusammensetzung, vorliegt und unter den folgenden Ölen, Harzen und Kohlenwasserstoffderivaten ausgewahlt ist:
- n- oder Isoparaffinen mit 18 bis 20 Kohlenstoffatomen, chlorierten Paraffinen,
- unter Düsentreibstoffen ausgewahlten Treibstoffen,
- naphthenischen Harzen oder Olen mit 5 bis 12 Kohlenstoffatomen,
- gegebenenfalls substituierten polyaromatischen Verbindungen, die gegebenenfalls ein oder mehrere Heteroatome enthalten.

2. Verwendung nach Anspruch 1, **dadurch gekennzeichnet, daß** der inerte organische Füllstoff 50 bis 95 Gew.-% der Gesamtmenge der Zusammensetzung ausmacht.

3. Verwendung nach Anspruch 1 oder 2, **dadurch gekennzeichnet, daß** es sich bei dem neutralen organischen Füllstoff um ein n-Paraffin oder ein Gemisch von n-Paraffinen handelt.

4. Verwendung nach Anspruch 1 oder 2, **dadurch gekennzeichnet, daß** es sich bei dem neutralen organischen Füllstoff um ein naphthenisches Harz handelt.

5. Verwendung nach Anspruch 1 oder 2, **dadurch gekennzeichnet, daß** es sich bei dem neutralen organischen Füllstoff um einen Düsentreibstoff handelt, bei dem es sich um Kerosin handelt.

6. Verwendung nach einem der vorhergehenden Ansprüche, **dadurch gekennzeichnet, daß** das Polyol unter Polyesterpolyolen, Polyetherpolyolen und Polydienpolyolen ausgewahlt ist.

7. Verwendung nach Anspruch 6, **dadurch gekennzeichnet, daß** es sich bei dem Polyol um ein Polydienpolyol handelt.

8. Verwendung nach Anspruch 7, **dadurch gekennzeichnet, daß** das Polydienpolyol eine zahlenmittlere Molmasse von höchstens 7000 und vorzugsweise zwischen 1000 und 3000 und eine Funktionalitat von 1 bis 5 und vorzugsweise 1,8 bis 3 aufweist.

9. Verwendung nach Anspruch 7 oder 8, **dadurch gekennzeichnet, daß** es sich bei dem Polydienpolyol um ein hydroxytelecheles Oligomer eines konjugierten Diens handelt.

10. Verwendung nach Anspruch 9, **dadurch gekennzeichnet, daß** es sich bei dem konjugierten Dien um Butadien handelt.

11. Verwendung nach einem der Ansprüche 1 bis 10, **dadurch gekennzeichnet, daß** es sich bei dem Polyisocyanat um ein aromatisches oder cycloaliphatisches Polyisocyanat oder ein Isocyanat-Prepolymer handelt.

12. Verwendung nach Anspruch 11, **dadurch gekennzeichnet, daß** es sich bei dem Polyisocyanat um Diphenylmethan-4,4'-diisocyanat (MDI) oder ein polymeres MDI handelt.

13. Verwendung nach Anspruch 10, **dadurch gekennzeichnet, daß** es sich bei dem Polyisocyanat um ein Prepolymer eines hydroxytelechelen Oligomers eines konjugierten Diens handelt.

14. Verwendung nach einem der Ansprüche 1 bis 13, **dadurch gekennzeichnet, daß** die vernetzbare Zusammensetzung ferner ein oder mehrere Polyole mit einer Molmasse von 50 bis 800 umfaßt.

15. Verwendung nach einem der Ansprüche 1 bis 14, **dadurch gekennzeichnet, daß** das NCO/OH-Molverhaltnis zwischen 0,5 und 2 liegt und vorzugsweise 0,65 bis 1,20 betragt.

16. Verwendung nach einem der Ansprüche 1 bis 15, **dadurch gekennzeichnet, daß** die Isolierungszusammensetzung einen Vernetzungskatalysator umfaßt.

17. Verwendung nach Anspruch 16, **dadurch gekennzeichnet, daß** es sich bei dem Vernetzungskatalysator um Dibutylzinndilaurat handelt.

18. Verwendung nach einem der Ansprüche 1 bis 17, **dadurch gekennzeichnet, daß** die vernetzte Isolierungszusammensetzung einen Warmeisolierungskoeffizienten von weniger als 0,25 W/m.K aufweist.

19. Unterseeische Produkttransportleitung, umfassend mindestens ein Rohrleitungssystem, gegebenenfalls mindestens ein Service-Rohrleitungssystem, eine rohrförmige Schutzhülle, durch die die Rohrleitungssysteme laufen, und eine Füllung aus einem Warmeisolierungsmaterial, **dadurch gekennzeichnet, daß** das Warmeisolierungsmaterial aus einer Isolierungszusammensetzung in Form eines aus einer vernetzbaren Zusammensetzung, wie sie für die Verwendung nach einem der Ansprüche 1 bis 18 definiert ist, erhaltenen Gels besteht.

20. Fernwarmeleitung, umfassend mindestens ein PVC-Rohrleitungssystem, das heißes Wasser vom Heizkraftwerk zu Wohnungen transportiert, eine rohrförmige Schutzhülle aus einem Kunststoff, PVC oder Polyethylen, durch die die Rohrleitungssysteme laufen, und eine Füllung aus einem Warmeisolierungsmaterial, **dadurch gekennzeichnet, daß** das Warmeisolierungsmaterial aus einer Isolierungszusammensetzung in Form eines Polyurethanelastomergels besteht, wobei die Zusammensetzung wie für die Verwendung nach einem der Ansprüche 1 bis 18 definiert ist.

21. Verfahren zur Warmeisolierung einer Leitung für den Transport von Materialien ausgehend von einer vernetzbaren Isolierungszusammensetzung, wie sie für die Verwendung nach einem der Ansprüche 1 bis 18 definiert ist, bei dem man:
a) die Polyolkomponente und die flüssige inerte Füllstoffkomponente der Isolierungszusammensetzung innig mischt;
b) die Mischung aus Schritt a) unter innigem Mischen aller Komponenten mit der Polyisocyanatkomponente der Isolierungszusammensetzung versetzt;
c) die aus Schritt b) erhaltene Mischung in den Zwischenraum zwischen der Außenflache der Leitung und der Innenflache der Schutzhülle gießformt oder spritzgießt;
d) in situ vernetzt und verfestigt, was die für den Einsatz an ihrem Verwendungsort bereite warmeisolierte Leitung ergibt.

22. Verfahren nach Anspruch 21, bei dem man den Formgebungsschritt c) und den Vernetzungsschritt d) in einer Form durchführt, was vorgeformte Warmeisolierungsteile für eine Leitung zum Transport von flüssigen Materialien ergibt, und in einem Schritt e) diese vorgeformten Teile um die Leitung herum zusammenfügt.

23. Vorgeformte Wärmeisolierungsteile, erhalten gemaß den Schritten a), b), c) und d) des Verfahrens nach Anspruch 22.
